# EUROPÄISCHE PATENTSCHRIFT

(11) **EP 3 104 170 B1**
(45) Veröffentlichungstag und Bekanntmachung des Hinweises auf die Patenterteilung: **19.06.2019**
(21) Anmeldenummer: 16167454.4
(22) Anmeldetag: 28.04.2016
(51) Int. Cl.: G01N 27/407

(54) **VERFAHREN ZUR HERSTELLUNG EINER MIKROMECHANISCHEN FESTSTOFFELEKROLYT-SENSORVORRICHTUNG**
METHOD FOR PRODUCING A MICROMECHANICAL SOLID ELECTROLYTE SENSOR DEVICE
PROCEDE DE FABRICATION D'UN DISPOSITIF DE CAPTEUR MICRO-MECANIQUE D'ELECTROLYTE SOLIDE

(30) Priorität: 11.06.2015 DE 102015210660
(43) Veröffentlichungstag der Anmeldung: 14.12.2016
(73) Patentinhaber: ROBERT BOSCH GMBH, 70442 Stuttgart (DE)
(72) Erfinder: Kunz, Denis, 74199 Untergruppenbach (DE); Widenmeyer, Markus, 71101 Schoenaich (DE); Roelver, Robert, 75365 Calw-Stammheim (DE)

(56) Entgegenhaltungen:
- WO-A1-2014/136329
- DE-A1-102008 002 446
- DE-A1-102013 204 665
- US-A1- 2006 166 064
- US-A1- 2009 181 278
- US-A1- 2013 277 217
- US-A1- 2014 318 960

## Beschreibung

### Stand der Technik

Aus dem Stand der Technik sind Sauerstoffsensoren auf Basis eines Festelektrolyten bekannt. Beispielsweise werden diese als sogenannte Lambdasonden im Automobilbereich eingesetzt, insbesondere zur Erfassung einer Luftzahl eines Luft-Kraftstoff-Gemischs. Derartige Sensoren werden gegenwärtig typischerweise mittels Siebdruckverfahren und/oder Dickschichttechnologie gefertigt. Als Beispiele sind sogenannte Lambda-Sprungsonden zu nennen. Jedoch auch sogenannte Breitband-Lambdasonden lassen sich hier erwähnen.

Aus DE 10 2012 201 304 A1 sind eine mikromechanische Feststoffelektrolyt-Sensorvorrichtung und ein entsprechendes Herstellungsverfahren bekannt. Die mikromechanische Feststoffelektrolyt-Sensorvorrichtung weist ein mikromechanisches Trägersubstrat mit einer Vorderseite und einer Rückseite, eine erste poröse Elektrode und eine zweite poröse Elektrode und einen zwischen der ersten porösen Elektrode und der zweiten porösen Elektrode eingebetteten Feststoffelektrolyten auf.

Derartige mikromechanische Feststoffelektrolyt-Sensorvorrichtungen weisen gegenüber herkömmlichen Feststoffelektrolytsensoren zahlreiche Vorteile auf. So bieten diese insbesondere Ansätze, um die Sensoren zu miniaturisieren, indem beispielsweise eine Herstellung mittels mikrosystemtechnischer Halbleiterprozesse erfolgt. Hierbei dient in vielen Fällen ein Halbleitermaterial, beispielsweise Silicium, als Substrat für eine Dünnschichtmembran aus einer sauerstoffionen-leitenden Funktionskeramik.

Auf dem Weg zu miniaturisierten Sensoren der genannten Art sind jedoch zahlreiche technische Herausforderungen zu überwinden. So weisen viele mikromechanische Sensoren Kavernen auf, welche durch ein Halbleitersubstrat hindurch geätzt sind. Eine elektrische Kontaktierung der Elektroden oder zumindest einer der Elektroden erfolgt durch die Kaverne, auch bezeichnet als Kavität, hindurch. Aufgrund großer Aspektverhältnisse ist hierbei die technische Herausforderung zu überwinden, dass Abrisse der Elektrodenfilme insbesondere in Kantenbereichen des Halbleitersubstrats und/oder der Kaverne auftreten können, welche insgesamt die Ausbeute des Herstellungsprozesses verringern können.

Aus der US 2014/0318960 A1 sind ein mikromechanischer Sauerstoffsensor und ein Verfahren zu seiner Herstellung bekannt.

Aus der US 2009/0181278 A1 sind eine Mikro-Brennstoffzelle sowie ein Herstellungsverfahren für eine derartige Mikro-Brennstoffzelle bekannt.

Aus der DE 10 2013 204 665 A1 sind ein mikroelektrochemischer Sensor und ein Verfahren zum Betreiben eines mikroelektrochemischen Sensors bekannt.

Aus der DE 10 2008 002 446 A1 ist ein Sensorelement bekannt.

Aus der US 2013/0277217 A1 ist ein mikromechanisch hergestellter Dünnschicht-Gassensor bekannt.

### Offenbarung der Erfindung

Im Rahmen der vorliegenden Erfindung wird ein Verfahren zur Herstellung einer mikromechanischen Feststoffelektrolytsensorvorrichtung vorgeschlagen, welches die oben genannten technischen Herausforderungen umgeht oder löst. Diese sind in dem unabhängigen Anspruch dargestellt. Bevorzugte Weiterbildungen der Erfindung, welche einzeln oder auch in Kombination realisierbar sind, sind in den abhängigen Ansprüchen dargestellt.

Unter einer Feststoffelektrolyt-Sensorvorrichtung ist dabei allgemein eine Sensorvorrichtung zu verstehen, welche mindestens einen Feststoffelektrolyten verwendet, also mindestens ein festes Material, welches eingerichtet ist, um Ionen zu leiten, insbesondere Sauerstoffionen. Bezüglich möglicher Feststoffelektrolyte kann auf den oben genannten Stand der Technik verwiesen werden. Insbesondere kann der Feststoffelektrolyt Zirkoniumdioxid umfassen, vorzugsweise Yttrium-stabilisiertes Zirkoniumdioxid (YSZ). Auch andere Feststoffelektrolyte sind grundsätzlich möglich. Die Feststoffelektrolyt-Sensorvorrichtung kann insbesondere eingerichtet sein, um mindestens eine Eigenschaft eines Gases in einem Messgasraum zu erfassen, insbesondere einen Sauerstoffanteil und/oder eine Luftzahl. Auch andere Feststoffelektrolyt-Sensorvorrichtungen sind jedoch grundsätzlich denkbar.

Unter dem Begriff "mikromechanisch" ist allgemein im Rahmen der vorliegenden Erfindung die Eigenschaft einer dreidimensionalen Struktur zu verstehen, welche Dimensionen im Mikrometerbereich, d.h. im Bereich <1 mm, aufweist. Beispielsweise können dies Breiten von Kavernen, laterale Ausdehnungen von Membranen oder ähnliche charakteristische Dimensionen sein, welche in diesem Bereich liegen.

Unter einem Trägersubstrat ist allgemein ein Element zu verstehen, welches eingerichtet ist, um ein oder mehrere weitere Elemente zu tragen und welches dementsprechend eine mechanische Stabilität aufweist. Insbesondere kann es sich, wie unten ausgeführt, dabei um ein Halbleitersubstrat handeln, welches mikromechanisch strukturiert ist und welches beispielsweise eine Kaverne, insbesondere ein Fenster, aufweist.

Die Begriffe "Vorderseite" und "Rückseite" sind zunächst willkürlich gewählt und bezeichnen zwei einander gegenüberliegende Seiten des mikromechanischen Trägersubstrats. Im späteren Einsatz der mikromechanischen Feststoffelektrolyt-Sensorvorrichtung kann beispielsweise die Vorderseite ganz oder teilweise dem Messgas ausgesetzt sein, wohingegen die Rückseite beispielsweise einem Referenzgas, insbesondere Luft, ausgesetzt sein kann. Auch andere Ausgestaltungen sind jedoch möglich.

Unter einem "Schichtaufbau" ist im Rahmen der vorliegenden Anmeldung eine Abfolge von mindestens zwei Schichten, welche direkt oder unter Zwischenschaltung einer oder mehrerer Zwischenschichten aufeinander aufgebracht sind, zu verstehen. Die Schichten können beispielsweise jeweils eine Dicke von 100 nm bis 500 µm aufweisen. Auch andere Dimensionen sind jeweils möglich. Jede Schicht für sich kann unstrukturiert sein oder kann auch, wie später noch näher beschrieben wird, eine Struktur in einer Schichtebene aufweisen.

Unter einer Elektrode ist allgemein im Rahmen der vorliegenden Erfindung ein Element zu verstehen, mittels dessen Ionen in den Feststoffelektrolyten eingebracht werden können, beispielsweise Sauerstoffionen, was auch als "Einbau" der Ionen bezeichnet wird, und/oder mittels dessen Ionen aus dem Feststoffelektrolyten ausgebracht werden können und beispielsweise in ein Gas umgewandelt werden können, beispielsweise Sauerstoffionen, wobei dieser Vorgang auch als "Ausbau" der Ionen bezeichnet wird. Bei den Elektroden kann es sich somit insbesondere um elektrische Kontakte zur elektrischen und/oder ionischen Kontaktierung des Feststoffelektrolyten handeln. Unter "porösen" Elektroden sind allgemein im Rahmen der vorliegenden Erfindung Elektroden zu verstehen, welche Poren aufweisen, derart, dass ein Gasdurchtritt durch die Elektroden möglich ist. So kann beispielsweise ein Gasdurchtritt durch die Elektroden erfolgen, wobei das Gas an einer Grenzfläche zwischen der Elektrode und dem Feststoffelektrolyten in Ionen umgewandelt wird und wobei die Ionen in ein Gitter des Feststoffelektrolyten eingebaut werden können.

Unter einer Kaverne ist allgemein im Rahmen der vorliegenden Erfindung ein Hohlraum zu verstehen. Unter einer durchgängigen Kaverne ist dementsprechend ein Hohlraum zu verstehen, welcher das Trägersubstrat von der Vorderseite bis zur Rückseite durchsetzt. Beispielsweise kann die Kaverne ganz oder teilweise als durchgängiges Fenster von der Vorderseite zur Rückseite ausgebildet sein, beispielsweise als rechteckiges Fenster. Auch andere Formen sind jedoch möglich.

Unter einer Membran ist allgemein im Rahmen der vorliegenden Erfindung eine dünne Schicht oder Schichtenfolge zu verstehen. Inbsesondere kann eine laterale Ausdehnung der Membran die Dicke der Membran um mindestens einen Faktor 10, vorzugsweise um mindestens einen Faktor 100, überschreiten. Die Membran wird im vorliegenden Fall durch den Schichtaufbau gebildet, wobei jedoch zusätzlich eine oder mehrere weitere Schichten in der Membran enthalten sein können.

Der Schichtaufbau ist auf der Vorderseite des mikromechanischen Trägersubstrats aufgebracht.

Die erste poröse Elektrode und die zweite poröse Elektrode sind von der Vorderseite kontaktierbar, können also auf der Vorderseite elektrisch kontaktiert werden. Beispielsweise können auf der Vorderseite des Trägersubstrats mindestens ein Elektrodenkontakt für die erste poröse Elektrode und mindestens ein Elektrodenkontakt für die zweite poröse Elektrode vorgesehen sein, sodass mittels mindestens eines geeigneten elektrischen Kontaktes, wie beispielsweise eines Klemmkontaktes und/oder eines Federkontaktes, die erste poröse Elektrode und die zweite poröse Elektrode von der Vorderseite her kontaktierbar sind. Es befindet sich keine Elektrodenkontaktierung auf der Rückseite des Trägersubstrates.

Die Schichtenfolge des Schichtaufbaus ist insbesondere derart definiert, dass die erste poröse Elektrode dem Trägersubstrat zuweist und die zweite poröse Elektrode von dem Trägersubstrat wegweist. Dementsprechend ist, von der Vorderseite aus betrachtet, die erste Elektrode die tiefer liegende Elektrode des Schichtaufbaus. Zur elektrischen Kontaktierung der ersten Elektrode ist mindestens eine Durchkontaktierung vorgesehen, welche den Feststoffelektrolyten durchdringt und mittels derer eine Kontaktierung der tiefer liegenden ersten porösen Elektrode von der Vorderseite her möglich ist.

Bei einem beispielhaften Verfahren zur Messung mindestens einer Eigenschaft eines Gases in einem Messgasraum, das aber nicht in den Schutzumfang der Ansprüche fällt, kann insbesondere mindestens eine chemische Eigenschaft des Gases und/oder eine physikalische Eigenschaft des Gases erfasst werden. Insbesondere kann bei dem Verfahren ein Sauerstoffanteil und/oder ein Sauerstoffpartialdruck erfasst werden. Dementsprechend kann das Verfahren insbesondere zur Erfassung einer Luftzahl dienen. Auch andere Eigenschaften können jedoch alternativ oder zusätzlich erfasst werden, beispielsweise ein Anteil mindestens einer Komponente des Gases. Bei dem Messgasraum kann es sich insbesondere um einen Gasraum in einem Kraftfahrzeug handeln, beispielsweise einen Abgastrakt. Bei dem Referenzgas kann es sich insbesondere um mindestens ein Gas mit mindestens einer bekannten Zusammensetzung handeln, beispielsweise Luft. Bei dem mindestens einen elektrischen Signal an der ersten porösen Elektrode und/oder an der zweiten porösen Elektrode kann es sich beispielsweise um eine Spannung zwischen der ersten porösen Elektrode und der zweiten porösen Elektrode handeln. Alternativ oder zusätzlich können jedoch auch ein oder mehrere Ströme an oder durch die erste poröse Elektrode und/oder die zweite poröse Elektrode erfasst werden. Insbesondere kann ein Sprungsignal erfasst werden, also ein Spannungssignal bei einem Durchtritt einer Luftzahl λ=1. Auch andere Messungen sind jedoch grundsätzlich möglich.

Bei dem erfindungsgemäßen Verfahren zur Herstellung der mikromechanischen Feststoffelektrolyt-Sensorvorrichtung wird eine Feststoffelektrolyt-Sensorvorrichtung hergestellt, sodass exemplarisch auf die obigen möglichen Ausgestaltungen der Sensorvorrichtung und/oder auf die nachfolgend noch näher beschriebenen Beispiele verwiesen werden kann. Die Verfahrensschritte können insbesondere in der genannten Reihenfolge durchgeführt werden. Auch eine andere Reihenfolge ist jedoch möglich. Weiterhin ist es auch möglich, dass zwei oder mehrere der Verfahrensschritte zeitlich überlappend oder zeitlich parallel durchgeführt werden. Weiterhin können auch ein, mehrere oder auch alle der Verfahrensschritte wiederholt durchgeführt werden.

Das Einbringen der durchgängigen Kaverne in das Trägersubstrat kann insbesondere durch einen Ätzprozess erfolgen. Dabei kann ein Trockenätzen oder auch Nassätzen erfolgen.

Unter einer Ätzstoppschicht kann allgemein eine Schicht oder eine Schichtenfolge verstanden werden, welche den verwendeten Ätzprozess zum Erliegen bringt, welche also zumindest teilweise resistent gegenüber dem Ätzprozess ist oder eine wesentlich geringere Ätzrate aufweist als das umliegende Material des Trägersubstrats. Beispielsweise können als Ätzstoppschicht ein oder mehrere Lacke verwendet werden. Auch andere Ätzstoppschichten lassen sich alternativ oder zusätzlich einsetzen.

Der Verfahrensschritt d) kann die beschriebenen Teilschritte b1)-b3) umfassen. Dabei wird der Begriff der "ersten Elektrodenschicht" und der "zweiten Elektrodenschicht" verwendet. Die Elektrodenschichten in diesen Verfahrensschritten müssen nicht notwendigerweise identisch mit der "ersten porösen Elektrode" und der "zweiten porösen Elektrode" sein. So kann es sich bei den Elektrodenschichten auch beispielsweise, wie unten noch näher beschrieben wird, um Vorstufen dieser porösen Elektroden handeln, welche beispielsweise noch durch einen oder mehrere Nachbehandlungsschritte umgewandelt und/oder ganz oder teilweise ersetzt werden, beispielsweise um eine Porosifizierung zu erzielen.

Unter einer "Porosifizierung" ist im Rahmen der vorliegenden Erfindung ein Verfahren zu verstehen, bei welchem eine Porosität in einen Stoff oder eine Schicht eingebracht wird oder bei welchem eine bereits bestehende Porosität erhöht wird. Dies kann insbesondere durch einen Oxidationsvorgang erfolgen. Alternativ oder zusätzlich kann dieser Vorgang jedoch auch eine Umwandlung, beispielsweise eine thermische Umwandlung, einer oder mehrerer Komponenten des Stoffes beinhalten, beispielsweise eine Initiation einer Gasbildung in dem Stoff, wodurch eine Porenbildung erfolgt. Derartige Vorgänge sind dem Fachmann aus dem Bereich der Herstellung von keramischen Bauelementen grundsätzlich bekannt.

Die erfindungsgemäß vorgeschlagenen Verfahren weisen gegenüber bekannten Verfahren zahlreiche Vorteile auf. So lässt sich insbesondere ein Membrankonzept mit einer vorderseitigen Kontaktierung realisieren, bei welchem sich Elektrodenabrisse zumindest weitgehend vermeiden lassen. Weiterhin lässt sich eine Vereinfachung einer elektrischen Kontaktierung, insbesondere einer Chipkontaktierung, bewerkstelligen.

Im Gegensatz zu bekannten Chipdesigns, bei welchen beispielsweise die Elektrodenschicht ganzflächig auf der Rückseite des Chips aufgebracht und ebenso rückseitig kontaktiert werden muss, ist es bei der vorliegenden Erfindung generell nicht notwendig, dass der Elektrodenfilm Kanten und damit Sollbruchstellen überbrücken muss. Die Bildung von Kantenabrissen des Elektrodenfilms ist dementsprechend unwahrscheinlich oder zumindest stark reduziert. Derartige Elektrodenrisse können bei herkömmlichen Vorrichtungen beispielsweise bei einer thermischen Zyklierung auftreten. Hierdurch lässt sich die Temperaturstabilität, die Langzeitstabilität und die Robustheit der mikromechanischen Feststoffelektrolyt-Sensorvorrichtung, welche allgemein insbesondere als Chip ausgebildet sein kann, deutlich erhöhen gegenüber herkömmlichen Chips.

Erfindungsgemäß lässt es sich weiterhin insbesondere realisieren, dass sowohl die erste poröse Elektrode als auch die zweite poröse Elektrode auf nur einer Seite des Chips elektrisch kontaktierbar sind, nämlich auf der Vorderseite.

Dies bringt Vorteile für die notwendige Aufbau- und Verbinungstechnik, da eine aufwändige zweiseitige, d.h. vorder- und rückseitige, Kontaktierung des Chips entfallen kann.

Erfolgt die Abscheidung des Feststoffelektrolyten, welcher auch als Funktionskeramik ausgestaltet sein kann, direkt auf die poröse erste Elektrode, welche auch als Rückelektrode bezeichnet werden kann, so ist mit einer guten Anbindung oder Verzahnung zwischen dem Feststoffelektrolyten und der ersten Elektrode zu rechnen. Diese Eigenschaft ist für einen möglichst verlustarmen Einbau von Sauerstoffionen in den Feststoffelektrolyten in vielen Fällen erforderlich und stellt beim Stand der Technik eine Herausforderung dar, insbesondere da dort in der Regel die Rückelektrode auf die dichte Funktionskeramik abgeschieden wird.

Zur Messung der mindestens einen Eigenschaft des Gases in dem Messgasraum, welches auch als Messgas bezeichnet werden kann, kann beispielsweise ein Sauserstoffionen leitende Funktionskeramik den Messgasraum gegenüber einem Referenzgasraum, beispielsweise einem Referenzluftraum, trennen. Dies kann mit Hilfe einer mikrosystemtechnisch erzeugten Dünnschichtmembran erreicht werden, welche sich im Rahmen der vorliegenden Erfindung realisieren lässt.

Bei der Herstellung der mikromechanischen Feststoffelektrolyt-Sensorvorrichtung kann als Trägersubstrat beispielsweise ein Halbleitersubstrat verwendet werden, beispielsweise ein Halbleitersubstrat, umfassend einen oder mehrere der folgenden Halbleiter: Si, SiC, GaAs, GaN.

Alternativ oder zusätzlich lassen sich jedoch auch andere Halbleitermaterialien einsetzen. Auf das Trägersubstrat kann in einem ersten Schritt vorder- und/oder rückseitig mindestens eine Ätzstoppschicht aufgebracht werden. Als mindestens eine Ätzstoppschicht auf der Vorderseite und/oder auf der Rückseite lassen sich beispielsweise anorganische Materialien nennen, insbesondere Si₃N₄ und/oder SiO₂. Alternativ oder zusätzlich sind jedoch auch andere Materialien als Ätzstopsschicht einsetzbar. Die mindestens eine Ätzstoppschicht kann ganz oder teilweise strukturiert werden. Beispielsweise kann eine rückseitige Strukturierung erfolgen, wodurch beispielsweise eine Kaverne oder die Grundstruktur der Kaverne auf der Rückseite des Trägersubstrats vorstrukturiert werden kann. Anschließend erfolgt eine ganzseitige Abscheidung der späteren Rückelektrode, also der ersten Elektrodenschicht, auf der Vorderseite. Hierauf kann im Folgenden die Dünnschicht des mindestens einen Feststoffelektrolyten, insbesondere der Funktionskeramik, aufgebracht werden. Beispielsweise kann es sich hierbei um Yttrium-stabilisiertes Zirkoniumdioxid (YSZ) handeln. Zum Abscheiden lassen sich verschiedene der Positionsverfahren einsetzen, beispielsweise eines oder mehrere der folgenden Verfahren: Sputterverfahren, Pulsed-Laser-Deposition, Atomic-Layer-Deposition. Durch rückseitiges Ätzen des Trägersubstrats, beispielsweise des Wafers und/oder Chips, bis hin zur vorderseitig aufgebrachten Ätzstoppschicht, kann eine Dünnschichtmembran freigestellt werden, welche dann beispielsweise nur noch den Schichtaufbau umfasst. Die Ätzstopschicht innerhalb des Membranbereichs kann anschließend entfernt werden. Ebenso kann eine vorderseitige Öffnung des Feststoffelektrolyten erfolgen, um die Rückelektrode elektrisch kontaktieren zu können, beispielsweise indem eine oder mehrere Durchkontaktierungen durch den Feststoffelektrolyten zur ersten Elektrodenschicht hin erfolgen. Schließlich kann die Abscheidung der vorderseitigen Elektrode und einer Ankontaktierung der Elektroden mittels Leiterbahnen erfolgen. Alternativ oder zusätzlich kann die Rückelektrode auch beispielsweise mittels Laserablation und/oder anderer Strukturierungsverfahren strukturiert und/oder im Membranbereich entfernt werden, um anschließend beispielsweise mittels nasschemischer Beschichtungsverfahren ein zweites, hochporöses Elektrodenmaterial aufzubringen.

Für den Verbund der ersten porösen Elektrode und des Feststoffelektrolyten ergeben sich folgende Ausführungsvarianten:
In einer ersten Ausführungsvariante kann die erste poröse Elektrode, welche als Rückelektrode dient, beispielsweise aus mindestens einer ersten Elektrodenschicht hergestellt werden, für welche ein dichtes Elektrodenmaterial verwendet wird. Als Beispiel lässt sich hier Platin oder eine Platin-Rhodium-Legierung nennen. Das dichte Elektrodenmaterial kann beispielsweise mittels Sputterverfahten, Atomic-Layer-Deposition und/oder andere Abscheideverfahren abgeschieden werden. Anschließend kann eine Abscheidung des Festelektrolyten direkt auf die dichte Elektrodenschicht erfolgen. Nach Entfernen der Ätzstoppschicht auf der Vorderseite kann dann beispielsweise ein Porosifizierung der Rückelektrode bzw. der ersten Elektrodenschicht erfolgen, beispielsweise durch die Kaverne hindurch, beispielsweise mit Hilfe eines Temperprozesses, um einen Gaszutritt an die Grenzfläche zwischen der ersten Elektrode und dem Feststoffelektrolyten zu ermöglichen. Erfindungsgemäß wird die erste Elektrodenschicht im Membranbereich ganz oder teilweise entfernt und durch ein poröses Elektrodenmaterial ersetzt, nämlich durch eine poröse Elektrodenschicht.

In einer zweiten Ausführungsvariante kann beispielsweise eine poröse Elektrodenschicht als erste Elektrodenschicht auf die Vorderseite abgeschieden werden. Beispielsweise kann es sich hierbei um Platin, eine Platin-Rhodium-Legierung, handeln, optional mit oxidischen Materialien verbunden. Dies kann beispielsweise mittels eines Sputterverfahrens und/oder mittels eines Co-Sputterverfahrens und/oder mittels nasschemischer Beschichtungsverfahren erfolgen. Auf diese Weise kann auf eine nachträgliche Porosifizierung verzichtet werden, und der Feststoffelektrolyt kann unmittelbar auf die poröse erste Elektrodenschicht aufgebracht werden. Für die nachfolgende Abscheidung des Feststoffelektrolyten ergeben sich wiederum zwei Untervarianten.

So kann in einer ersten Untervariante die Abscheidung des Feststoffelektrolyten direkt auf die poröse Rückelektrode, also die poröse erste Elektrode, erfolgen. Alternativ oder zusätzlich kann vor der Abscheidung des Feststoffelektrolyten auch die poröse Rückelektrode, also die poröse erste Elektrode, ganz oder teilweise mit einem Lack aufgefüllt werden. Insbesondere bei einem teilweisen Auffüllen kann eine gute Anbindung und/oder Verzahnung zwischen dem Elektrolyten und der ersten Elektrode erreicht werden. Dies ist vorteilhaft für einen möglichst verlustarmen Einbau von Sauerstoffionen in den Feststoffelektrolyten. Der Lack nach Abscheidung des Feststoffelektrolyten beispielsweise mit Hilfe eines Pyrolyseprozessese wieder entfernt werden. In einer dritten Variante kann die erste poröse Elektrode vor Abscheidung des Feststoffelektrolyten ganz oder teilweise geglättet werden, beispielsweise durch ein Schleif- und/oder Polierverfahren, durch ein Sputterverfahren, ein Ätzverfahren, eine thermische Behandlung oder eine Kombination der genannten Verfahren und/oder anderer Verfahren.

### Kurze Beschreibung der Figuren

Weitere Einzelheiten und Merkmale ergeben sich aus der nachfolgenden Beschreibung bevorzugter Ausführungsbeispiele, insbesondere in Kombination mit den Ansprüchen. Die Erfindung ist jedoch nicht auf die Ausführungsbeispiele beschränkt. Es zeigen:
- Figuren 1A-1H: eine erste Ausführungsvariante eines beispielhaften Verfahrens zur Herstellung einer mikromechanischen Feststoffelektrolyt-Sensorvorrichtung und ein erstes Beispiel einer Feststoffelektrolyten-Sensorvorrichtung (Figur 1H); und
- Figuren 2A-2I: eine Ausführungsform eines erfindungsgemäßen Verfahrens zur Herstellung einer mikromechanischen Feststoffelektrolyt-Sensorvorrichtung und die
- beispielhafte: Feststoffelektrolyt-Sensorvorrichtung in einer zweiten Ausführungsvariante (Figur 2I).

### Beschreibung der Ausführungsformen

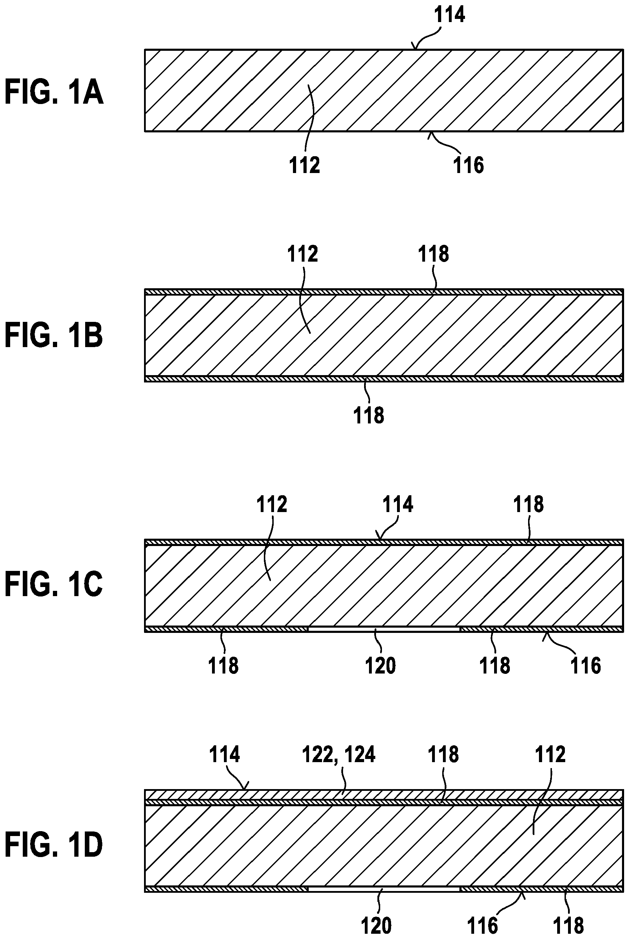

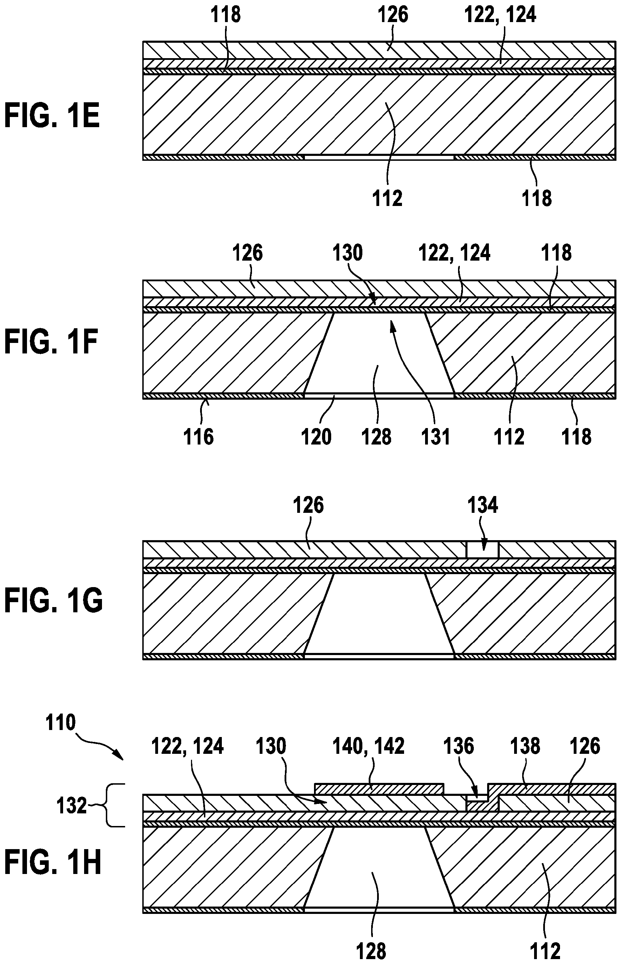

In den Figuren 1A-1H ist eine beispielhafte Ausführungsform eines Verfahrens zur Herstellung einer mikromechanischen Feststoffelektrolyt-Sensorvorrichtung 110 dargestellt. Während die Figuren 1A-1G Zwischenprodukte zeigen, zeigt Figur 1H die mikromechanische Feststoffelektrolyt-Sensorvorrichtung 110. Diese kann jedoch noch weitere Elemente umfassen.

In einem ersten, in Figur 1A dargestellten Verfahrensschritt, wird mindestens ein mikromechanisches Trägersubstrat 112 bereitgestellt, beispielsweise mindestens ein Halbleitersubstrat, beispielsweise Silicium. Insbesondere kann diese Bereitstellung in Form mindestens eines Wafers erfolgen. Das Trägersubstrat weist eine Vorderseite 114 und eine Rückseite 116 auf.

In einem in Figur 1B dargestellten Verfahrenschritt werden beidseitig auf das Trägersubstrat 112 Ätzstoppschichten 118 aufgebracht. Beispielsweise kann die mindestens eine Ätzstoppschicht 118 ausgewählt sein aus Schichten von Si₃N₄ und/oder SiO₂. Alternativ oder zusätzlich sind jedoch auch andere Materialien einsetzbar.

In einem weiteren, in Figur 1C dargestellten Verafhrensschritt wird die auf der Rückseite 116 aufgebrachte Ätzstopschicht 118 geöffnet, sodass rückseitig ein Fenster 120 in der Ätzstoppschicht 118 entsteht. Dieses kann beispielsweise im Wesentlichen der Gestalt der späteren Kaverne entsprechen. Dieses rückseitige Öffnen der Ätzstoppschicht 118 kann beispielsweise durch ein Ätzverfahren erfolgen, beispielsweise ein Nassätzen und/oder ein Trockenätzen.

In einem weiteren, in Figur 1D dargestellten Verfahrensschritt wird auf die Vorderseite 114, insbesondere auf die dort aufgebrachte Ätzstoppschicht 118, mindestens eine erste Elektrodenschicht 122 aufgebracht, welche, wie oben ausgeführt, entweder bereits unmittelbar der ersten porösen Elektrode 124 entsprechen kann oder welche später noch weiter porosifiziert werden kann. Die erste poröse Elektrode 124 kann auch als Rückelektrode bezeichnet werden.

In einem weiteren, in Figur 1E dargestellten Verfahrenschritt wird der mindestens eine Feststoffelektrolyt 126 auf die erste Elektrodenschicht 122 und/oder auf die erste poröse Elektrode 124 aufgebracht. Insbesondere kann es sich dabei um einen Sauerstoffionen leitenden Feststoffelektrolyten handeln, wie beispielsweise Yttrirum-stabilisiertes Zirkoniumdioxid. Für mögliche Verfahren der Abscheidung des mindestens einen Feststoffelektrolyten 126 kann auf die obige Beschreibung verwiesen werden. Die Abscheidung kann in einem Schritt oder auch in mehreren Schritten erfolgen.

In einem weiteren, in Figur 1F dargestellten Verfahrensschritt wird das Trägersubstrat 112 strukturiert, indem eine Kaverne 128 von der Rückseite 116 her in das Trägersubstrat 112 geätzt wird. Dieses Ätzen erfolgt durch das Fenster 120 in der rückseitigen Ätzstoppschicht 118 hindurch, beispielsweise im Rahmen eines Nassätzprozesses und/oder eines Trockenätzprozesses.

Durch Ausbilden der Kaverne 128 in dem Trägersubstrat 112 wird eine Membran 130 definiert, welche durch einen Schichtaufbau 132 im Bereich der Kaverne 128 gebildet wird. Die Membran 130 bildet im Bereich der Kaverne 128 einen Membranbereich 131. In einem in Figur 1G dargestellten Verfahrensschritt kann die Ätzstoppschicht 118 im Bereich der Kaverne 128 entfernt werden. Weiterhin kann mindestens eine Öffnung 134 für eine Durchkontaktierung in den Feststoffelektrolyten 126 eingebracht werden, beispielsweise mittels eines lithographischen Verfahrens, gefolgt von einem Ätzverfahren. In einem anschließenden, in Figur 1H dargestellten Schritt kann eine Durchkontaktierung 136 hersgestellt werden, indem ein Rückelektrodenkontakt 138 elektrisch durch die Öffnung 134 hindurch an die erste Elektrodenschicht 122 angebunden wird. Beispielsweise kann diese elektrische Anbindung über mindestens eine Leiterbahn erfolgen. Weiterhin kann eine zweite Elektrodenschicht 140 auf den mindestens einen Feststoffelektrolyten 126 aufgebracht werden, welche direkt oder nach weiteren Behandlungsschritten wie beispielsweise einer Porosifizierung, mindestens eine zweite poröse Elektrode 142 bilden kann.

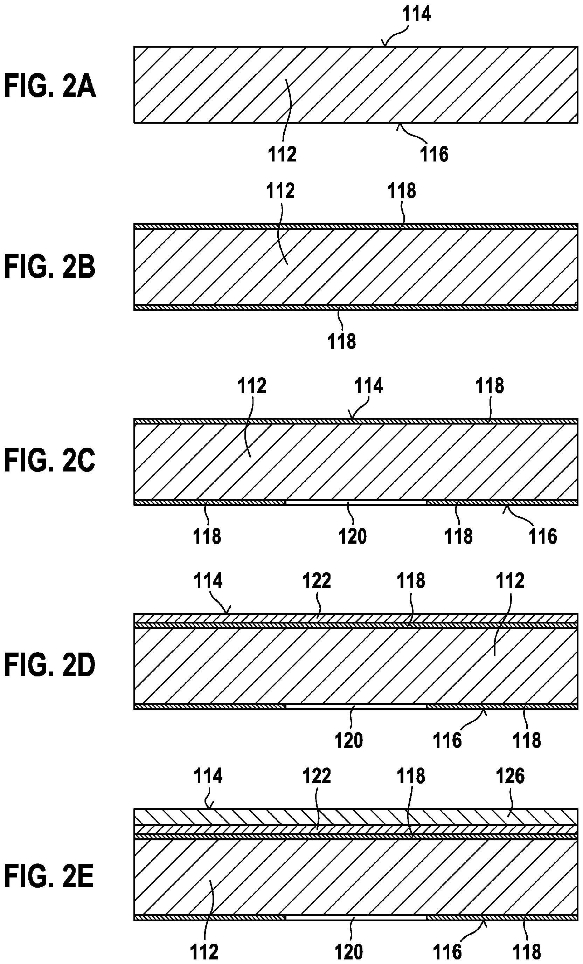

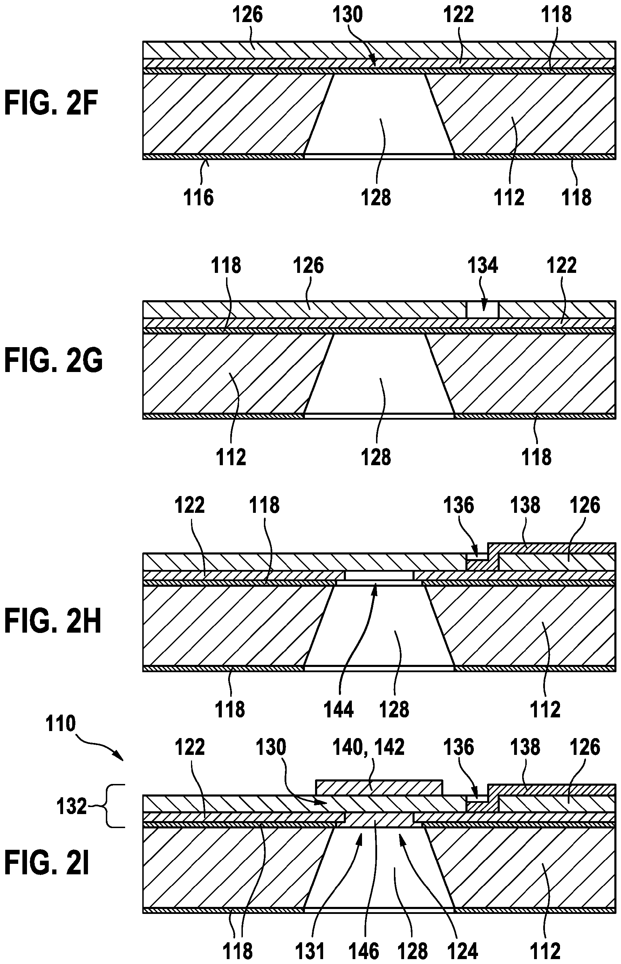

In den Figuren 2A-2I ist ein Herstellungsverfahren gemäß der Ansprüche gezeigt. Dabei entsprechen die Verfahrenschritte gemäß den Figuren 2A-2C weitgehend den Verfahrensschritten gemäß Figuren 1A-1C.

In Figur 2D wird, im Gegensatz zu Figur 1D, zwar ebenfalls wieder eine erste Elektrodenschicht 122 aufgetragen, welche jedoch in diesem Ausführungsbeispiel eine dichte Elektrodenschicht ist. Die Verfahrensschritte in den Figuren 2E-2G entsprechen wiederum den Verfahrensschritten in den Figuren 1E-1G, sodass auf die Beschreibung dieser Verfahrensschritte verwiesen werden kann.

In Verfahrensschritt 2H erfolgt wiederum, analog zu Verfahrensschritt 1H, eine Bildung einer Durchkontaktierung 136 durch die in Verfahrensschritt 2G gebildete Öffnung 134, sodass ein Rückelektrodenkontakt 138 angebunden wird. Gleichzeitig oder zeitversetzt zu diesem Schritt kann jedoch die erste Elektrodenschicht 122 im Bereich der Kaverne 128 entfernt werden, sodass eine Öffnung 144 in der ersten Elektrodenschicht 122 gebildet wird. Diese Öffnung kann anschließend, wie in Figur 2I gezeigt, ganz oder teilweise mit mindestens einem porösen Elektrodenmaterial 146 gefüllt werden, welches dann über die verbleibende erste Elektrodenschicht 122 und den Rückelektrodenkontakt 138 elektrisch kontaktiert werden kann. Dieses poröse Elektrodenmaterial 146 kann dann, beispielsweise alleine oder gemeinsam mit der ersten Elektrodenschicht 122, die erste poröse Elektrode 124 bilden.

Anschließend oder zeitgleich kann dann, analog zu Figur 1H oben, die zweite poröse Elektrode 142 aufgebracht werden.

Die mikromechanische Feststoffelektrolyt-Sensorvorrichtung 110 gemäß Figur 1H und/oder gemäß Figur 2I kann beispielsweise im Bereich der Abgassensorik im Kraftfahrzeugbereich, im Bereich der Abgassensorik in stationären Heizanlagen, in Brandmeldesystemen, in der Gassensorik im Mobiltelefon, in der Atemgasanalyse, in der industriellen Prozessüberwachung oder auch in anderen Einsatzgebieten zum Einsatz kommen, in welchen eine Erfassung mindestens einer Eigenschaft eines Messgases erforderlich ist. Insbesondere kann eine Gaszusammensetzung bestimmt werden, beispielsweise ein Sauerstoffanteil, in einem Messgas, welches mit der Vorderseite 114 in Kontakt gebracht wird. Die Rückseite 116 hingegen kann beispielsweise mit einem Referenzgas, beispielsweise Referenzluft, beaufschlagt werden. An den Elektroden 124, 142 können beispielsweise ein oder mehrere Signale erfasst werden, beispielsweise eine oder mehrere Spannungen und/oder ein oder mehrere Ströme.

## Patentansprüche

1. Verfahren zur Herstellung einer mikromechanischen Feststoffelektrolyt-Sensorvorrichtung (110), umfassend die folgenden Schritte:
a) Bereitstellen eines mikromechanischen Trägersubstrats (112) mit einer Vorderseite (114) und einer Rückseite (116);
b) Aufbringen eines Schichtaufbaus (132) auf die Vorderseite (114), wobei der Schichtaufbau (132) eine erste poröse Elektrode (124), eine zweiten poröse Elektrode (142) und einen zwischen der ersten porösen Elektrode (124) und der zweiten porösen Elektrode (142) eingebetteten Feststoffelektrolyten (126) aufweist, derart, dass die erste poröse Elektrode (124) und die zweite poröse Elektrode (142) von der Vorderseite (114) her kontaktierbar sind; und
c) Einbringen einer durchgängigen Kaverne (128) in das Trägersubstrat (112), so dass die Kaverne (128) mindestens einen Membranbereich (131) einer durch den Schichtaufbau (132) gebildeten Membran (130) definiert,
d) Einbringung einer Öffnung (134) für eine Durchkontaktierung in den Feststoffelektrolyten (126);
e) Bildung einer Durchkontaktierung (136) durch die Öffnung (134), indem ein Rückelektrodenkontakt (138) elektrisch durch die Öffnung (134) hindurch an die erste Elektrodenschicht (122) angebunden wird;
f) wobei die erste Elektrodenschicht (122) nach Durchführung des Verfahrensschritts c) im Membranbereich (131) zumindest teilweise durch die Kaverne (128) hindurch entfernt wird und ganz oder teilweise durch mindestens ein poröses Elektrodenmaterial (146) ersetzt wird.

2. Verfahren nach dem vorhergehenden Anspruch, wobei zwischen den Schichtaufbau (132) und das Trägersubstrat (112) in Verfahrensschritt b) mindestens eine Ätzstoppschicht (118) eingebracht wird, wobei in Verfahrensschritt c) die Kaverne (128) durch Ätzen des Trägersubstrats (112) bis zu der Ätzstoppschicht (118) in das Trägersubstrat (112) eingebracht wird.

3. Verfahren nach einem der beiden vorhergehenden Ansprüche, wobei Verfahrensschritt b) folgende Teilschritte umfasst:
b1) direktes oder indirektes Aufbringen mindestens einer ersten Elektrodenschicht (122) der ersten porösen Elektrode (124) auf die Vorderseite (114);
b2) direktes oder indirektes Aufbringen des Feststoffelektrolyten (126) auf die erste Elektrodenschicht (122); und
b3) direktes oder indirektes Aufbringen mindestens einer zweiten Elektrodenschicht (140) der zweiten porösen Elektrode (142) auf den Feststoffelektrolyten (126).

4. Verfahren nach einem der drei vorhergehenden Ansprüche, wobei die erste Elektrodenschicht (122) nach Durchführung des Verfahrensschritts c) zumindest in dem Membranbereich (131) porosifiziert wird.

## Claims

1. Method for producing a micromechanical solid electrolyte sensor device (110), comprising the following steps:
a) providing a micromechanical carrier substrate (112) having a front side (114) and a rear side (116) ;
b) applying a layer construction (132) on the front side (114), wherein the layer construction (132) has a first porous electrode (124), a second porous electrode (142) and a solid electrolyte (126) embedded between the first porous electrode (124) and the second porous electrode (142), in such a way that the first porous electrode (124) and the second porous electrode (142) are contactable from the front side (114); and
c) introducing a continuous cavity (128) into the carrier substrate (112), such that the cavity (128) defines at least one membrane region (131) of a membrane (130) formed by the layer construction (132),
d) introducing an opening (134) for a plated-through hole into the solid electrolyte (126);
e) forming a plated-through hole (136) through the opening (134) by means of a rear electrode contact (138) being electrically linked to the first electrode layer (122) through the opening (134) ;
f) wherein, after carrying out method step c), the first electrode layer (122) is removed in the membrane region (131) at least partly through the cavity (128) and is replaced wholly or partly by at least one porous electrode material (146).

2. Method according to the preceding claim, wherein in method step b), at least one etch stop layer (118) is introduced between the layer construction (132) and the carrier substrate (112), wherein in method step c), the cavity (128) is introduced into the carrier substrate (112) by etching the carrier substrate (112) as far as the etch stop layer (118).

3. Method according to either of the two preceding claims, wherein method step b) comprises the following substeps:
b1) directly or indirectly applying at least one first electrode layer (122) of the first porous electrode (124) on the front side (114) ;
b2) directly or indirectly applying the solid electrolyte (126) on the first electrode layer (122); and
b3) directly or indirectly applying at least one second electrode layer (140) of the second porous electrode (142) on the solid electrolyte (126).

4. Method according to any of the three preceding claims, wherein, after carrying out method step c), the first electrode layer (122) is porosified at least in the membrane region (131).

## Revendications

1. Procédé de fabrication d'un dispositif de détection à électrolyte solide (110), comprenant les étapes suivantes :
a) fourniture d'un substrat porteur (112) micromécanique pourvu d'un côté avant (114) et d'un côté arrière (116) ;
b) application d'une structure en couches (132) sur le côté avant (114), la structure en couches (132) possédant une première électrode poreuse (124), une deuxième électrode poreuse (142) et un électrolyte solide (126) incorporé entre la première électrode poreuse (124) et la deuxième électrode poreuse (142) de telle sorte que le contact avec la première électrode poreuse (124) et la deuxième électrode poreuse (142) peut être établi depuis le côté avant (114) ; et
c) pratique d'une caverne (128) continue dans le substrat porteur (112) de telle sorte que la caverne (128) définit au moins une zone de membrane (131) d'une membrane (130) formée par la structure en couches (132),
d) pratique d'une ouverture (134) pour un contact traversant dans l'électrolyte solide (126) ;
e) formation d'un contact traversant (136) à travers l'ouverture (134) en reliant électriquement un contact d'électrode arrière (138) à la première couche d'électrode (122) à travers l'ouverture (134) ;
f) la première couche d'électrode (122), après l'exécution de l'étape c), étant au moins partiellement retirée dans la zone de membrane (131) à travers la caverne (128) et entièrement ou partiellement remplacée par au moins un matériau d'électrode poreux (146).

2. Procédé selon la revendication précédente, au moins une couche d'arrêt de gravure (118) étant, à l'étape b), introduite entre la structure en couches (132) et le substrat porteur (112), la caverne (128) étant pratiquée dans le substrat porteur (112) à l'étape c) par gravure du substrat porteur (112) jusqu'à la couche d'arrêt de gravure (118).

3. Procédé selon l'une des deux revendications précédentes, l'étape b) comprenant les étapes partielles suivantes :
b1) application directe ou indirecte d'au moins une première couche d'électrode (122) de la première électrode poreuse (124) sur le côté avant (114) ;
b2) application directe ou indirecte de l'électrolyte solide (126) sur la première couche d'électrode (122) ; et
b3) application directe ou indirecte d'au moins une deuxième couche d'électrode (140) de la deuxième électrode poreuse (142) sur l'électrolyte solide (126).

4. Procédé selon l'une des trois revendications précédentes, la première couche d'électrode (122) étant rendue poreuse au moins dans la zone de membrane (131) après l'exécution de l'étape c).
